(19)

**Europäisches Patentamt**
**European Patent Office**
**Office européen des brevets**

(11) **EP 4 354 541 A1**

(12) **EUROPEAN PATENT APPLICATION**
published in accordance with Art. 153(4) EPC

(43) Date of publication:
**17.04.2024 Bulletin 2024/16**

(21) Application number: **22820511.8**

(22) Date of filing: **07.06.2022**

(51) International Patent Classification (IPC):
$H01M\ 4/36$ (2006.01)      $H01M\ 4/62$ (2006.01)
$H01M\ 4/525$ (2010.01)      $H01M\ 4/505$ (2010.01)
$H01M\ 10/052$ (2010.01)      $H01M\ 4/02$ (2006.01)

(52) Cooperative Patent Classification (CPC):
H01M 4/625; H01M 4/02; H01M 4/131; H01M 4/36;
H01M 4/364; H01M 4/366; H01M 4/485;
H01M 4/505; H01M 4/525; H01M 4/5825;
H01M 4/583; H01M 4/587; H01M 4/62;
H01M 10/052; H01M 10/0525;      (Cont.)

(86) International application number:
**PCT/KR2022/007973**

(87) International publication number:
**WO 2022/260383 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.06.2021   KR 20210074304**

(71) Applicant: **Samsung SDI Co., Ltd.**
**Yongin-si, Gyeonggi-do 17084 (KR)**

(72) Inventors:
• **MOON, Jong Seok**
**Yongin-Si Gyeonggi-do 17084 (KR)**

• **SON, In Hyuk**
**Yongin-Si Gyeonggi-do 17084 (KR)**
• **KAPYLOU, Andrei**
**Yongin-Si Gyeonggi-do 17084 (KR)**
• **KIM, Gue Sung**
**Yongin-Si Gyeonggi-do 17084 (KR)**
• **MAH, Sang Kook**
**Yongin-Si Gyeonggi-do 17084 (KR)**
• **JO, Sung Nim**
**Yongin-Si Gyeonggi-do 17084 (KR)**

(74) Representative: **Marks & Clerk LLP**
**15 Fetter Lane**
**London EC4A 1BW (GB)**

(54) **COMPOSITE CATHODE ACTIVE MATERIAL, CATHODE AND LITHIUM BATTERY WHICH EMPLOY SAME, AND PREPARATION METHOD THEREFOR**

(57)     A composite cathode active material, a cathode and a lithium battery that include the composite cathode active material, and a method of preparing the composite cathode active material. The composite cathode active material includes: a $1^{st}$ core including a first lithium transition metal oxide; a $2^{nd}$ core including a second lithium transition metal oxide; and a shell disposed along a surface of at least one of the $1^{st}$ core and the $2^{nd}$ core, wherein the shell includes: at least one first metal oxide represented by Formula $M_aO_b$ (where $0<a\leq3$, $0<b<4$, and when a is 1, 2, or 3, b is not an integer); and a carbon-based material, the at least one first metal oxide is disposed in a matrix of the carbon-based material, M is at least one metal selected from Groups 2 to 13, 15, and 16 of the Periodic Table of Elements, and the first lithium transition metal oxide and the second lithium transition metal oxide have a different average particle diameter from each other.

**EP 4 354 541 A1**

**(Cont. next page)**

FIG. 1

(52) Cooperative Patent Classification (CPC): (Cont.)
H01M 2004/021; H01M 2004/028; Y02E 60/10

**Description**

Technical Field

The present disclosure relates to a composite cathode active material, a cathode and a lithium battery that include the composite cathode active material, and a method of preparing the composite cathode active material.

BACKGROUND ART

For miniaturization and high performance of various devices, high energy density of lithium batteries is becoming more important in addition to small-size and light-weight characteristics. In other words, high-capacity lithium batteries are becoming important.

To implement lithium batteries suitable for the use above, cathode active materials having high capacity are being considered.

Nickel-based cathode active materials of the related art have degraded lifespan characteristics and poor thermal stability due to side reactions.

Therefore, there is a need for a method capable of preventing deterioration of battery performance while including a nickel-based cathode active material.

Disclosure

Technical Problem

An aspect provides a novel composite cathode active material capable of inhibiting a side reaction of a composite cathode active material and improving reversibility of an electrode reaction, so as to prevent deterioration of lithium performance.

Another aspect provides a cathode including the composite cathode active material.

Another aspect provides a lithium battery including the cathode.

Another aspect provides a method of preparing the composite cathode active material.

Technical Solution

According to an aspect, provided is a composite cathode active material including:

a $1^{st}$ core comprising a lithium transition metal oxide;
a $2^{nd}$ core comprising a second lithium transition metal oxide; and
a shell disposed along a surface of at least one of the $1^{st}$ core and the $2^{nd}$ core,
wherein the shell includes: at least one first metal oxide represented by $M_aO_b$ (where $0<a\leq3$, $0<b<4$, and when a is 1, 2, or 3, b is not an integer); and a carbon-based material,
the at least one first metal oxide is disposed in a matrix of the carbon-based material, and M is at least one metal selected from Groups 2 to 13, 15, and 16 of the Periodic Table of Elements, and
the first lithium transition metal oxide and the second lithium transition metal oxide have a different average particle diameter from each other.

According to another aspect,
provided is a cathode including the cathode active material.

According to another aspect,
provided is a lithium battery including the cathode.

According to another aspect, provided is a method of preparing a composite cathode active material, the method including:

providing a first lithium transition metal oxide; providing a second lithium transition metal oxide; providing a composite; preparing at least one of a $1^{st}$ core/shell and a $2^{nd}$ core/shell, wherein the $1^{st}$ core/shell structure is obtained by mechanically milling the first lithium transition metal oxide and the composite and the $2^{nd}$ core/shell structure is obtained by mechanically milling the second lithium transition metal oxide and the composite; and
mixing the $1^{st}$ core/shell structure with the second lithium transition metal oxide, mixing the $2^{nd}$ core/shell structure with the first lithium transition metal oxide, or mixing the $1^{st}$ core/shell structure with the $2^{nd}$ core/shell structure,
wherein the composite comprises: at least one first metal oxide represented by $M_aO_b$ (where $0<a\leq3$, $0<b<4$, and when a is 1, 2, or 3, b is not an integer); and a carbon-based material, and
the at least one first metal oxide is disposed in a matrix of the carbon-based material, and M is at least one metal selected from Groups 2 to 13, 15, and 16 of the Periodic Table of Elements.

Advantageous Effects

According to an aspect, in a composite cathode active material, a shell including a first metal oxide and a carbon-based material may be disposed on at least one core of a large-diameter lithium transition metal oxide and a small-diameter lithium transition metal oxide, and accordingly, high-temperature cycle characteristics of a lithium battery may be improved and an increase in internal resistance of a lithium battery may be suppressed.

Description of Drawings

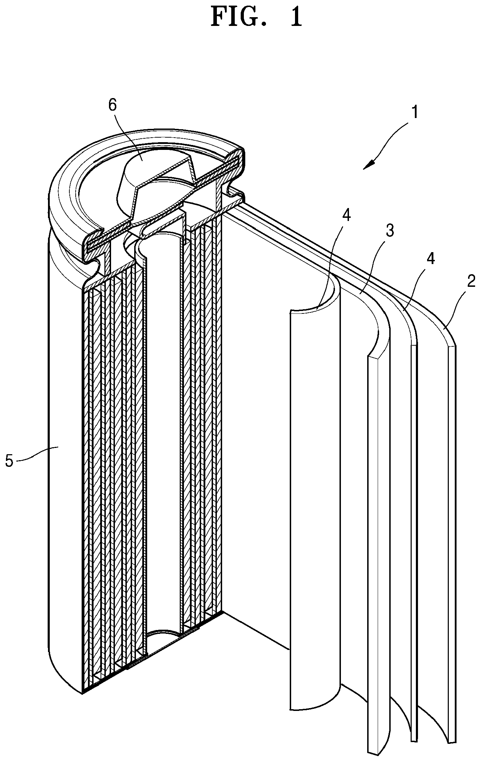

FIG. 1 is a schematic view of a lithium battery according to an embodiment.

Best Mode

The present inventive concept described hereinbelow may have various modifications and various embodiments, example embodiments will be illustrated in the drawings and more fully described in the detailed description. The present inventive concept may, however, should not be construed as limited to the example embodiments set forth herein, and rather, should be understood as covering all modifications, equivalents, or alternatives falling within the scope of the present inventive concept.

The terms used herein is for the purpose of describing particular embodiments only, and is not intended to be limiting the present inventive concept. An expression used in the singular encompasses the expression of the plural, unless it has a clearly different meaning in the context. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. As used herein, "/" may be interpreted as "and", or as "or" depending on the context.

In the drawings, thicknesses may be magnified or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element.

The term "particle diameter" of particles as used herein refers to an average diameter of particles when the particles are spherical, and refers to an average major axis length of particles when the particles are non-spherical. The particle diameter of the particles may be measured using a particle size analyzer (PSA). The "particle diameter' of the particles may refer to, for example, an average particle diameter. The average particle diameter may be, for example, a median particle diameter (D50). The median particle diameter D50 is a particle size corresponding to a 50 % cumulative volume calculated from particles having a small particle size in a particle size distribution measured by, for example, a laser diffraction method.

Hereinafter, according to example embodiments, a composite cathode active material, a cathode and a lithium battery that include the composite cathode active material, and a method of preparing the composite cathode active material will be further described in detail.

An aspect provides a composite cathode active material including: a 1st core including a first lithium transition metal oxide; a 2nd core including a second lithium transition metal oxide; and a shell disposed along a surface of at least one of the 1st core and the 2nd core, wherein the shell includes: at least one first metal oxide represented by Formula $M_aO_b$ (where $0<a\leq3$, $0<b<4$, and when a is 1, 2, or 3, b is not an integer); and a carbon-based material, the at least one first metal oxide is disposed in a matrix of the carbon-based material, M is at least one metal selected from Groups 2 to 13, 15, and 16 of the Periodic Table of Elements, and the first lithium transition metal oxide and the second lithium transition metal oxide have a different average particle diameter from each other.

Hereinafter, a theoretical basis for providing an excellent effect of a composite cathode active material according to an embodiment will be described, but the theoretical basis is to help understanding of the present inventive concept and is not intended to limit the present inventive concept in any way.

By disposing a carbon-based conductive material in voids between cathode active materials, the electronic conductivity of a cathode may be improved. However, since a conductive material does not have ion conductivity, the ionic conductivity of a cathode may be rather decreased. In addition, as a thickness of a cathode increases, a decrease in the ionic conductivity of a cathode may become significant. Consequently, the performance degradation of a lithium battery employing such a cathode may be remarkable. Meanwhile, the composite cathode active material includes a 1st core corresponding to a first lithium transition metal oxide and a 2nd core corresponding to a second lithium transition metal oxide, and the 1st core and the 2nd core have different particle diameters from each other. Accordingly, the 2nd core may be disposed in voids between the 1st core particles, or the 1st core may be disposed in voids between the 2nd core particles. Therefore, the ionic conductivity of a cathode including the composite positive electrode active material may be improved by additionally disposing other core particles in the voids between the core particles. In addition, since the shell of the core particles includes a carbon-based material, the electronic conductivity of a cathode including the composite cathode active material may be improved by additionally disposing other core particles in the voids between the core particles. As a result, a lithium battery including the composite cathode active material may have improved the high-temperature cycle characteristics, and an increase in the internal resistance may be suppressed. In addition, the energy density of a lithium battery including the composite cathode active material may be further improved by additionally disposing other core particles in the voids between the core particles.

Carbon-based materials in the art easily agglomerate, and thus are difficult to be uniformly coated on the core. Meanwhile, the composite cathode active material uses a composite including a plurality of first metal oxides disposed in a matrix of the carbon-based material, thereby preventing aggregation of the carbon-based material and uniformly disposing the shell on the 1st core and/or the 2nd core. Accordingly, by effectively blocking a contact between the core and an electrolyte, side reactions due to the contact therebetween may be prevented. In addition, the generation of a resistive layer is suppressed by suppressing cation mixing by the electrolyte. Also, elution of transition metal ions is also suppressed. The carbon-based material may be, for example, a crystalline carbon-based material. The carbon-based material may be, for example, a carbon-based nanostructure. The carbon-based material may be, for example, a two-dimensional carbon-based nanostructure. An example of the carbon-based material may be graphene. In this case, since a shell including graphene and/or a matrix thereof has flexibility, a change in volume of the composite cathode active material may be easily accepted during charging and discharging of a battery, and accordingly, occurrence of cracks in the composite cathode active material may be suppressed. Since graphene has high electronic conductivity, interfacial resistance between the composite cathode active material and an electrolyte solution may decrease. Therefore, despite the introduction of a shell including graphene, the internal resistance of a lithium battery may be maintained or reduced.

Since the carbon-based material included in the shell of the composite cathode active material is derived from a graphene matrix, the carbon-based material may have a relatively low density and high porosity as compared with a conventional carbon-based material derived from a graphite-based material. A d002 interplanar distance of the carbon-based material included in the shell of the composite cathode active material may be, for example, greater than or equal to about 3.38 angstrom (Å), greater than or equal to about 3.40 Å, greater than or equal to about 3.45 Å, greater than or equal to about 3.50 Å, greater than or equal to about 3.60 Å, greater than or equal to about 3.80 Å, or greater than or equal to about 4.00 Å. The d002 interplanar distance of the carbon-based material included in the shell of the composite cathode active material may be, for example, in a range of about 3.38 to about 4.0 Å, about 3.38 to about 3.8 Å, about 3.38 to about 3.6 Å, about 3.38 to about 3.5 Å, or about 3.38 to about 3.45 Å. Meanwhile, the d002 interplanar distance of a conventional carbon-based material derived from a graphite-based material may be, for example, less than or equal to about 3.38 Å or in a range of about 3.35 Å to about 3.38 Å.

Since the first metal oxide has voltage resistance, deterioration of the lithium transition metal oxide included in the core may be prevented during charging and discharging at a high voltage. For example, the shell may include one type of the first metal oxide or two or more different types of the first metal oxide. Consequently, the high-temperature cycle characteristics of a lithium battery including the aforementioned composite cathode active material may be improved.

In the composite cathode active material, a content of the shell may be, for example, in a range of 0.5 wt% to 3 wt%, 0.5 wt% to 2.5 wt%, 0.5 wt% to 2 wt%, or 0.5 wt% to 1.5 wt%, based on the total weight of the composite cathode active material. In addition, a content of first metal oxide may be, for example, in a range of 0.3 wt% to 1.8 wt%, 0.3 wt% to 1.5 wt%, 0.3 wt% to 1.2 wt%, or 0.3 wt% to 0.9 wt%, based on the total weight of the composite cathode active material. When the composite cathode active material includes the shell and the first metal oxide within the ranges above, respectively, the cycle characteristics of a lithium battery including the composite cathode active material may be further improved.

In the composite cathode active material, for example, the particle diameter of the first lithium transition metal oxide is large and larger than that of the second lithium transition metal oxide. For example, the first lithium transition metal oxide may be a large-diameter lithium transition metal oxide. The term "particle diameter" refers to, for example, an average particle diameter. In the composite cathode active material, for example, the particle diameter of the second lithium transition metal oxide is small and smaller than that of the first lithium transition metal oxide. For example, the second lithium transition metal oxide may be a small-diameter lithium transition metal oxide. The term "particle diameter" refers to, for example, an average particle diameter.

In the composite cathode active material, for example, the first lithium transition metal oxide may be a large-diameter lithium transition metal oxide, and the second lithium transition metal oxide may be a small-diameter lithium transition metal oxide. That is, the 1st core may be a large-diameter lithium transition metal oxide, and the 2nd core may be a small-diameter lithium transition metal oxide. For example, the 2nd core having a smaller average particle diameter than the 1 st core may be disposed in the voids between the 1st core particles. By disposing the 2nd core particles, which are small-diameter particles, in the voids between the 1st core particles, which are large-diameter particles, the ion conductivity and electronic conductivity of a cathode including the composite cathode active material may be simultaneously improved. In addition, the energy density of a cathode including the composite cathode active material may be improved. Consequently, the energy density and cycle characteristics of a lithium battery including the composite cathode active material may be improved.

The first lithium transition metal oxide and the second lithium transition metal oxide may have, for example, a bimodal particle size distribution in a particle size distribution chart. For example, the composite cathode active material may have a bimodal particle size distribution having two peaks in a particle size distribution chart obtained by using a particle size analyzer (PSA) or the like. The bimodal particle size distribution may have a first peak corresponding to the first lithium transition metal oxide and a second peak corresponding to the second lithium transition metal oxide.

The average particle diameter of the first lithium transition metal oxide may be, for example, greater than 10 $\mu$m to 25 $\mu$m or less, and for example, may be in a range of 11 $\mu$m to 20 $\mu$m, 12 $\mu$m to 20 $\mu$m, 12 $\mu$m to 19 $\mu$m, or 15 $\mu$m to 19 $\mu$m. The average particle diameter of the first lithium transition metal oxide may be, for example, a median particle diameter D50. The average particle diameter of the second lithium transition metal oxide may be, for example, in a range of 1 $\mu$m to 10 $\mu$m, 2 $\mu$m to 10 $\mu$m, 2 $\mu$m to 9 $\mu$m, 2 $\mu$m to 8 $\mu$m, or 2 $\mu$m to 6 $\mu$m. The average particle diameter of the second lithium transition metal oxide may be, for example, a median particle diameter D50. When the average particle diameter of each of the first lithium transition metal oxide and the second lithium transition metal oxide is within the ranges above, the energy density and/or cycle characteristics of a lithium battery including the composite cathode active material may be further improved.

The average particle diameter of each of the first lithium transition metal oxide and the second lithium transition metal oxide may be measured by, for example, a measurement apparatus using a laser diffraction method or a dynamic light scattering method. The average particle diameter may be measured using, for example, a laser scattering particle size distribution meter (e.g., LA-920 of Horiba Ltd.), and is a value of the median particle diameter D50 when the metal oxide particles are accumulated to 50 % from small particles in volume conversion.

The weight ratio of the first lithium transition metal oxide to the second lithium transition metal oxide may be, for example, in a range of 90:10 to 60:40, 85:15 to 65:35, 80:20 to 65:35, or 75:25 to 65:35. When the weight ratio of the first lithium transition metal oxide to the second lithium transition metal oxide is within the ranges above, the energy density and/or cycle characteristics of a lithium battery including the composite cathode active material may be further improved.

In the composite cathode active material, for example, the shell may be disposed only on the 1st core. That is, the shell may be disposed on the 1st core and may not be disposed on the 2nd core. For example, the shell may be disposed on the first lithium transition metal oxide, which is a large-diameter lithium transition metal oxide, and may not be disposed on the second lithium transition metal oxide, which is a small-diameter lithium transition metal oxide. By disposing the shell on the 1st core, a 1st core/shell structure may be obtained. When the composite cathode active material includes such a 1st core/shell structure and the second core, the energy density and/or cycle characteristics of a lithium battery including the composite cathode active material may be further improved.

In the composite cathode active material, for example, the shell may be disposed only on the 2nd core. That is, the shell may be disposed on the 2nd core and may not be disposed on the 1st core. For example, the shell may be disposed on the second lithium transition metal oxide, which is a small-diameter lithium transition metal oxide, and may not be disposed on the first lithium transition metal oxide, which is a large-diameter lithium transition metal oxide. By disposing the shell on the 2nd core, a 2nd core/shell structure may be obtained. When the composite cathode active material includes such a 2nd core/shell structure and the second core, the energy density and/or cycle characteristics of a lithium battery including the composite cathode active material may be further improved.

In the composite cathode active material, for example, the shell may be disposed on both the 1st core and the 2nd core. That is, the shell may be disposed on the 1st core, and simultaneously disposed on the 2nd core. For example, the shell may be disposed on the first lithium transition metal oxide, which is a large-diameter lithium transition metal oxide, and disposed on the second lithium transition metal oxide, which is a small-diameter lithium transition metal oxide. A 1st core /shell structure may be obtained by disposing the shell on the 1st core, and a 2nd core/shell structure may be obtained by disposing the shell on the 2nd core. When the composite cathode active material includes both the 1st core/shell structure and the 2nd core/shell structure, the energy density and/or cycle characteristics of a lithium battery including the composite cathode active material may be further improved.

A metal included in the first metal oxide may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from

$Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$). By disposing the first metal oxide in a matrix of the first carbon-based material, the uniformity of the shell on the core may be improved, and the voltage resistance of the composite cathode active material may be further improved. For example, the shell may include, as the first metal oxide, $Al_2O_x$ (where $0<x<3$).

The shell may further include at least one second metal oxide represented by $M_aO_c$ (where $0<a\leq3$, $0<b<4$, and when a is 1, 2, or 3, c is an integer). Here, M may be at least one metal selected from Groups 2 to 13, 15, and 16 of the Periodic Table of Elements. For example, the second metal oxide may include the same metal as the first metal oxide, and a ratio of c to a (c/a) of the second metal oxide may be greater than a ratio of b to a (b/a) of the first metal oxide. For example, $c/a > b/a$. The second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. The first metal oxide may be obtained by partial or full reduction of the second metal oxide. Accordingly, the first metal oxide may have a lower oxygen content and a greater oxidation number than the second metal oxide. For example, the shell may include $Al_2O_x$ (where $0<x<3$) as the first metal oxide and $Al_2O_3$ as the second metal oxide.

Unless otherwise described below, the "core" may be interpreted as a term including at least one of the "1st core" and the "2nd core".

Unless otherwise described below, the "lithium transition metal oxide" may be interpreted as a term including at least one of the "first lithium transition metal oxide" and the "second lithium transition metal oxide".

In the composite cathode active material, for example, the carbon-based material included in the shell and the transition metal of the lithium transition metal oxide included in the core are chemically bound through a chemical bond. The carbon atom (C) of the carbon-based material included in the shell and the transition metal (Me) of the lithium transition metal oxide may be, for example, chemically bound through an oxygen atom-mediated C-O-Me bond (e.g., a C-O-Ni bond or a C-O-Co bond). The core and the shell may form a composite through chemical binding between the carbon-based material included in the shell and the lithium transition metal oxide included in the core. In this regard, such a composite may be distinguished from a simple physical mixture of the carbon-based material and the lithium transition metal oxide.

In addition, the first metal oxide included in the shell and the carbon-based material may be also chemically bound through a chemical bond. Here, the chemical bond may be, for example, a covalent bond or an ionic bond. The covalent bond may be, for example, a bond including at least one of an ester group, an ether group, a carbonyl group, an amide group, a carbonate anhydride group, and an acid anhydride group. The ionic bond may be, for example, a bond including a carboxylic acid ion, an ammonium ion, an acyl cation group, and the like.

The thickness of the shell may be, for example, in a range of 1 nm to 5 μm, 1 nm to 1 μm, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, or 1 nm to 20 nm. When the thickness of the shell is within the ranges above, the electronic conductivity of an electrode including the composite cathode active material may be improved.

The composite cathode active material may further include, for example, a third metal doped on the core or a third metal oxide coated on the core. Then, the shell may be disposed on the doped third metal or the coated third metal oxide. For example, after the third metal is doped on the surface of the lithium transition metal oxide included in the core or the third metal oxide is coated on the surface of the lithium transition metal oxide included in the core, the shell may be disposed on the third metal and/or the third metal oxide. For example, the composite cathode active material may include: the core; an interlayer disposed on the core; and the shell disposed on the interlayer, wherein the interlayer may include the third metal or the third metal oxide. The third metal may be at least one metal selected from Al, Zr, W, and Co, and the third metal oxide may be $Al_2O_3$, $Li_2O$-$ZrO_2$, $WO_2$, CoO, $Co_2O_3$, $Co_3O_4$, and the like.

The shell included in the composite cathode active material may include, for example, at least one selected from a composite including the first metal oxide and a carbon-based material, such as graphene, and a milling result of the composite, wherein the first metal oxide may be disposed in a matrix of the carbon-based material, for example, a graphene matrix. The shell may be, for example, prepared by using the composite including the first metal oxide and the carbon-based material such as graphene. The composite may further include a second metal oxide having a different composition from the at least one first metal oxide, in addition to the first metal oxide. The composite may include, for example, at least two types of the first metal oxide. The composite may include, for example, at least two types of the first metal oxide and at least two types of the second metal oxide.

The content of at least one of the composite and the milling product thereof included in the composite cathode active material may be, for example, less than or equal to 3 wt%, less than or equal to about 2 wt%, less than or equal to about 1 wt% or less, or less than or equal to about 0.5 wt%, based on the total weight of the composite cathode active material. The content of at least one of the composite and the milling product may be in a range of 0.01 wt% to 3 wt%, 0.01 wt% to about 1 wt%, 0.01 wt% to 0.7 wt%, or 0.01 wt% to 0.5 wt%, based on the total weight of the composite cathode active material. When the composite cathode active material includes at least one of the composite and the milling product thereof in the content within the ranges above, the cycle characteristics of a lithium battery including the composite cathode active material may be further improved.

The content of at least one of the composite and the milling product thereof included in the 1st core/shell structure may be, for example, less than or equal to 3 wt%, less than or equal to about 2 wt%, less than or equal to about 1 wt% or less, or less than or equal to about 0.5 wt%, based on the total weight of the 1st core/shell structure. The content of at least one of the composite and the milling product may be in a range of 0.01 wt% to 3 wt%, 0.01 wt% to about 1 wt%, 0.01 wt% to 0.7 wt%, or 0.01 wt% to 0.5 wt%, based on the total weight of the 1st core/shell structure. When the 1st core/shell structure includes at least one of the composite and the milling product thereof in the content within the ranges above, the cycle characteristics of a lithium battery including the composite cathode active material may be further improved.

The content of at least one of the composite and the milling product thereof included in the 2nd core/shell structure may be, for example, less than or equal to 3 wt%, less than or equal to about 2 wt%, less than or equal to about 1 wt% or less, or less than or equal to about 0.5 wt%, based on the total weight of the 2nd core/shell structure. The content of at least one of the composite and the milling product may be in a range of 0.01 wt% to 3 wt%, 0.01 wt% to about 1 wt%, 0.01 wt% to 0.7 wt%, or 0.01 wt% to 0.5 wt%, based on the total weight of the 2nd core/shell structure. When the 2nd core/shell structure includes at least one of the composite and the milling product thereof in the content within the ranges above, the cycle characteristics of a lithium battery including the composite cathode active material may be further improved.

The average particle diameter of at least one selected from the first metal oxide and the second metal oxide included in the composite may be in a range of 1 nm to 1 $\mu$m, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, 7 nm to 20 nm, or 7 nm to 15 nm. Since the first metal oxide and/or the second metal oxide has a particle diameter within the nanometer ranges above, the first metal oxide and/or the second metal oxide may be more uniformly distributed in a matrix of the carbon-based material of the composite. Accordingly, the composite may be then uniformly coated on the core without agglomeration to form a shell. In addition, when the particle diameter of first metal oxide and/or the second metal oxide is within the ranges above, the first metal oxide and/or the second metal oxide may be more uniformly disposed on the core. Therefore, by uniformly disposing the first metal oxide and/or the second metal oxide on the core, the voltage resistance characteristics of a battery including the composite may be more effectively exhibited.

The average particle diameter of each of the first metal oxide and the second metal oxide may be measured by, for example, a measurement apparatus using a laser diffraction method or a dynamic light scattering method. The average particle diameter may be measured using, for example, a laser scattering particle size distribution meter (e.g., LA-920 of Horiba Ltd.), and is a value of the median particle diameter D50 when the metal oxide particles are accumulated to 50 % from small particles in volume conversion.

The uniformity deviation of at least one selected from the first metal oxide and the second metal oxide included in the composite may be less than or equal to 3 %, less than or equal to 2 %, or less than or equal to 1 %. The uniformity may be obtained by, for example, XPS. Accordingly, at least one selected from the first metal oxide and the second metal oxide may be uniformly distributed in the composite with the deviation of less than or equal to 3 %, less than or equal to 2 %, or less than or equal to 1 %.

The carbon-based material included in the composite may have, for example, a branched structure, and at least one selected from the first metal oxide and the second metal oxide may be distributed in the branched structure of the metal-based material. The branched structure of the carbon-based material may include, for example, a plurality of carbon-based material particles that contact each other. When the carbon-based material has such a branched structure, various conducting paths may be provided.

The carbon-based material included in the composite may be, for example, graphene. The graphene may have, for example, a branched structure, and at least one metal oxide selected from the first metal oxide and the second metal oxide may be distributed in the branched structure of the graphene. The branched structure of the graphene may include, for example, a plurality of graphene particles that contact each other. Since the graphene has such a branched structure, various conducting paths may be provided.

The carbon-based material included in the composite may have, for example, a spherical structure, and at least one metal oxide selected from the first metal oxide and the second metal oxide may be distributed in the spherical structure. The spherical structure of the carbon-based material may have a size in a range of 50 nm to 300 nm. A plurality of the carbon-based material having the spherical structure may be provided. When the carbon-based material has such a spherical structure, the composite may have a rigid structure.

The carbon-based material included in the composite may be, for example, graphene. The graphene may have, for example, a spherical structure, and at least one metal oxide selected from the first metal oxide and the second metal oxide may be distributed in the spherical structure. The spherical structure of the graphene may have a size in a range of 50 nm to 300 nm. A plurality of graphenes having the spherical structure may be provided. When the graphene has such a spherical structure, the composite may have a rigid structure.

The carbon-based material included in the composite may have, for example, a spiral structure in which a plurality of spherical structures are connected to each other, and at least one metal oxide selected from the first metal oxide and the second metal oxide may be distributed in the spherical structure of the spiral structure. The spiral structure of the carbon-based material may have a size in a range of 500 nm to 100 $\mu$m. When the carbon-based material has such a spiral structure, the composite may have a rigid structure.

The carbon-based material included in the composite may be, for example, graphene. The graphene may have, for example, a spiral structure in which a plurality of spherical structures are connected, and at least one metal oxide selected from the first metal oxide and the second metal oxide may be distributed in the spherical structure of the spiral structure. The spiral structure of the graphene may have a size in a range of 500 nm to 100 $\mu$m. Since the graphene has such a spiral structure, the composite may have a rigid structure.

The carbon-based material included in the composite may have, for example, a cluster structure in which a plurality of spherical structures are aggregated with each other, and at least one metal oxide selected from the first metal oxide and the second metal oxide may be distributed in the spherical structure of the cluster structure. The cluster structure of the carbon-based material may have a size in a range of 0.5 mm to 10 cm. When the carbon-based material has such a cluster structure, the composite may have a rigid structure.

The carbon-based material included in the composite may be, for example, graphene. The graphene may have, for example, a cluster structure in which a plurality of spherical structures are aggregated, and at least one metal oxide selected from the first metal oxide and the second metal oxide may be distributed in the spherical structure of the cluster structure. The cluster structure of the graphene may have a size in a range of 0.5 mm to 10 cm. Since the graphene has such a cluster structure, the composite may have a rigid structure.

The composite may have, for example, a crumpled faceted-ball structure, and at least one selected from the first metal oxide and the second metal oxide may be distributed inside or on the surface of the structure. Since the composite has such a faceted-ball structure, the composite may be easily coated on the irregular surface unevenness of the core.

The composite may have, for example, a planar structure, and at least one selected from the first metal oxide and the second metal oxide may be distributed inside or on the surface of the structure. Since the composite has such a two-dimensional planar structure, the composite may be easily coated on the irregular surface unevenness of the core.

The carbon-based material included in the composite may extend from the first metal oxide by a distance of less than or equal to about 10 nm, and may include at least 1 to 20 carbon-based material layers. For example, when a plurality of carbon-based material layers are laminated, a carbon-based material having a total thickness of less than or equal to about 12 nm may be disposed on the first metal oxide. For example, the total thickness of the carbon-based material may be in a range of 0.6 nm to 12 nm.

The carbon-based material included in the composite may be, for example, graphene. The graphene may extend from the first metal oxide by a distance of less than or equal to about 10 nm, and may include at least 1 to 20 graphene layers. For example, when a plurality of graphene layers are laminated, graphene having a total thickness of less than or equal to about 12 nm may be disposed on the first metal oxide. For example, the total thickness of graphene may be in a range of 0.6 nm to 12 nm.

The 1st core and/or the 2nd core included in the composite cathode active material may include, for example, a lithium transition metal oxide represented by Formula 1:

$$\text{Formula 1} \qquad Li_aCo_xM_yO_{2-b}A_b$$

wherein, in Formula 1,

$1.0 \leq a \leq 1.2$, $0 \leq b \leq 0.2$, $0.9 \leq x \leq 1$, $0 \leq y \leq 0.1$, and $x+y=1$,

M may be manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

The 1st core and/or the 2nd core included in the composite cathode active material may include, for example, a lithium transition metal oxide represented by one of Formulae 2 to 4:

$$\text{Formula 2} \qquad LiNi_xCo_yMn_zO_2$$

$$\text{Formula 3} \qquad LiNi_xCo_yAl_zO_2$$

wherein, in Formulae 2 and 3, $0.8 \leq x \leq 0.95$, $0 \leq y \leq 0.2$, $0 < z \leq 0.2$, and $x+y+z=1$,

Formula 4 $\qquad$ $LiNi_xCo_yMn_zAl_wO_2$

wherein, in Formula 4, $0.8 \leq x \leq 0.95$, $0 \leq y \leq 0.2$, $0 < z \leq 0.2$, $0 < w \leq 0.2$, and $x+y+z+w=1$.

The lithium transition metal oxide represented by one of Formulae 1 to 4 may include nickel in the content of greater than or equal to about 80 mol%, greater than or equal to about 85 mol%, or greater than or equal to about 90 mol%, based on the total moles of transition metal, and may provide excellent initial capacity and lifespan characteristics at room temperature and at a high temperature. For example, the nickel content in the lithium transition metal oxide represented by one of Formulae 1 to 4 may be in a range of 80 mol% to 95 mol%, 85 mol% to 95 mol%, or 90 mol% to 95 mol%, based on the total moles of transition metal.

The 1st core and/or the 2nd core included in the composite cathode active material may include, for example, a lithium transition metal oxide represented by one of Formulae 5 and 6:

Formula 5 $\qquad$ $Li_aCo_xM_yO_{2-b}A_b$

wherein, in Formula 5,

$1.0 \leq a \leq 1.2$, $0 \leq b \leq 0.2$, $0.9 \leq x \leq 1$, $0 \leq y \leq 0.1$, and $x+y=1$,

M may be Mn, Nb, V, Mg, Ga, Si, W, Mo, Fe, Cr, Cu, Zn, Ti, Al, B, or a combination thereof, and A may be F, S, Cl, Br, or a combination thereof,

Formula 6 $\qquad$ $LiCoO_2$.

Another aspect provides a cathode including the composite cathode active material. By including the composite cathode active material, the cathode may provide improved cycle characteristics and increased electrical conductivity.

The cathode may be, for example, prepared according to the following method, but the preparation method thereof is not necessarily limited to the exemplified method and may be adjusted to required conditions.

First, a cathode active material composition is prepared by mixing the aforementioned composite cathode active material, a conductive material, a binder, and a solvent. The prepared cathode active material composition may be directly coated and dried on an aluminum current collector to form a cathode plate provided with a cathode active material layer. Alternatively, a film obtained by casting the cathode active material composition on a separate support and separating it from the support may be laminated on an aluminum current collector to prepare a cathode plate on which the cathode active material layer is formed.

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and the like; and a conductive polymer such as a polyphenylene derivative. However, embodiments are not limited thereto, and any suitable conductive material available in the art may be used. Alternatively, the cathode may not include, for example, a separate conductive material.

Examples of the binder are a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene butadiene-rubber polymer, and the like, and examples of the solvent are N-methyl pyrrolidone (NMP), acetone, water, and the like. However, embodiments are not limited thereto, and any suitable binder and solvent available in the art may be used.

By further adding a plasticizer or a pore former to the cathode active material composition, pores may be formed inside an electrode plate.

The contents of the composite cathode active material, the conductive material, the binder, and the solvent used in the cathode may be at levels general for use in a lithium battery. Depending on the use and configuration of a lithium battery, one or more of the conductive material, the binder, and the solvent may be omitted.

The content of the binder included in the cathode may be in a range of 0.1 wt% to 10 wt% or 0.1 wt% to 5 wt%, based on the total weight of the cathode active material layer. The content of the composite cathode active material included in the cathode may be in a range of 90 wt% to 99 wt% or 95 wt% to 99 wt%, based on the total weight of the composite cathode active material.

In addition, the cathode may additionally include a general cathode active material other than the aforementioned composite cathode active material.

As the general cathode active material, any suitable lithium-containing metal oxide available in the art may be used without limitation. For example, at least one composite oxide of lithium and a metal selected from Co, Mn, Ni, and a combination thereof may be used, and a specific example thereof may be a compound represented by one of the

following formulae: $Li_aA_{1-2}$ (where $0.90 \leq a \leq 1$ and $0 \leq b \leq 0.5$); $Li_aE_{1-b}B_bO_{2-c}D_c$ (where $0.90 \leq a \leq 1$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, $0 < \alpha \leq 2$); $Li_aNi_{1-b-c}Co_bB_cO_{2-\alpha}F_2$ (where $0.90 \leq a \leq 1$, $0 \leq b \leq 0.5$, $0 \leq c \leq 0.05$, $0 < \alpha \leq 2$); $Li_aNi_{1-b-c}Mn_bB_cD_\alpha$ (where $0.90 \leq a \leq 1$, $0 \leq b \leq 0.5$, $0 \leq c \leq 0.05$, $0 < \alpha \leq 2$); $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, $0 < \alpha \leq 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$, $0 < \alpha \leq 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound in which a coating layer is additionally provided on the surface of the aforementioned compound may be used, and a mixture of the aforementioned compound and a compound additionally provided with a coating layer may be also used. The coating layer additionally provided on the surface of the aforementioned compound may include, for example, a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, or the like. A detailed description of the coating method will be omitted because it may be well understood by those in the art.

Another aspect provides a lithium battery including the cathode that includes the composite cathode active material.

When the lithium battery includes the cathode including the composite cathode active material, the improved cycle characteristics and improved thermal stability may be provided.

The lithium battery may be, for example, prepared according to the following method, but the preparation method thereof is not necessarily limited to the exemplified method and may be adjusted to required conditions.

First, a cathode is prepared according to the aforementioned preparation method of the cathode.

Next, an anode is prepared as follows. The anode may be, for example, prepared in the same manner as in the cathode, except that an anode active material is used instead of the composite cathode active material. In addition, in the anode active material composition, the substantially same conductive material, binder, and solvent used in the cathode preparation may be used.

For example, an anode active material, a conductive material, a binder, and a solvent may be mixed to prepare an anode active material composition. The anode active material composition may be then directly coated on a copper current collector to prepare an anode electrode plate. Alternatively, an anode active material film obtained by casting the anode active material composition on a separate support and separating it from the support may be laminated on a copper current collector to prepare an anode electrode plate.

As the anode active material, any suitable anode active material available in the art for a lithium battery may be used. For example, the anode active material may include at least one selected from lithium metal, a metal alloyable with lithium, a transition metal oxide, a non-transition metal oxide, and a carbon-based material.

Examples of the metal alloyable with lithium are silicon (Si), tin (Sn), aluminum (Al), germanium (Ge), lead (Pb), bismuth (Bi), antimony (Sb), a Si-Y alloy (where Y is an alkali metal, an alkaline earth metal, a Group 13 element, a Group 14 element, a transition metal, a rare earth element, or a combination thereof, and Y is not Si), and a Sn-Y alloy (wherein Y is an alkali metal, an alkaline earth-metal, a Group 13 element, a Group 14 element, a transition metal, a rare earth element, or a combination thereof, and Y is not Sn). The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include, for example, a lithium titanium oxide, a vanadium oxide, a lithium vanadium oxide, and the like.

The non-transition metal oxide may be, for example, $SnO_2$, SiOx (where $0 < x < 2$), and the like.

The carbon-based material may be, for example, crystalline carbon, amorphous carbon, or a mixture thereof. The crystalline carbon may be, for example, amorphous, plate-like, flake-like, spherical, or fibrous graphite, such as natural graphite or artificial graphite. The amorphous carbon may be, for example, soft carbon (carbon sintered at a low temperature) or hard carbon, mesophase pitch carbide, sintered coke, and the like.

The contents of the anode active material, the conductive material, the binder, and the solvent may be at levels general for use in a lithium battery. Depending on the use and configuration of a lithium battery, one or more of the conductive material, the binder, and the solvent may be omitted.

The content of the binder included in the anode may be in a range of 0.1 wt% to 10 wt% or 0.1 wt% to 5 wt%, based on the total weight of the anode active material layer. The content of the conductive material included in the anode may be in a range of 0.1 wt% to 10 wt% or 0.1 wt% to 5 wt%, based on the total weight of the anode active material layer. The content of the anode active material included in the anode may be in a range of 90 wt% to 99 wt% or 95 wt% to 99 wt%, based on the total weight of the anode active material layer. When the anode active material is lithium metal, the anode may not include a binder and a conductive material.

Next, a separator to be disposed between the cathode and the anode is prepared.

The separator may be any suitable separator commonly used in a lithium battery. The separator may have, for example, low resistance to migration of ions in an electrolyte and have electrolyte solution-retaining ability. The separator may be, for example, glass fiber, polyester, Teflon, polyethylene, polypropylene, polytetrafluoroethylene (PTFE), and a combination thereof, each of which may be in a non-woven fabric form or a woven fabric form. For a lithium-ion battery, a rollable separator including, for example, polyethylene or polypropylene may be used. A separator with a good organic electrolyte solution-retaining ability may be used for a lithium-ion polymer battery.

The separator may be, for example, prepared according to the following example method, but embodiments are not limited thereto, and the method may be controlled according to the required conditions.

First, a separator composition is prepared by mixing a polymer resin, a filler, and a solvent. Then, the separator composition is directly coated on an electrode, and then dried to form a separator. Alternatively, a separator film obtained by casting the separator composition on a support, drying, and separating it from the support may be laminated on an electrode to form a separator.

The polymer used in the separator preparation is not particularly limited, and any suitable polymer available as a binder for an electrode plate may be used. For example, a vinylidene fluoride/hexafluoropropylene copolymer, polyvinylidene fluoride (PVDF), polyacrylonitrile, polymethylmethacrylate, or a mixture thereof may be used.

Next, an electrolyte may be prepared.

The electrolyte may be, for example, an organic electrolyte solution. The organic electrolyte solution may be, for example, prepared by dissolving a lithium salt in an organic solvent.

For use as the organic solvent, any suitable organic solvent available in the art may be used. Examples of the organic solvent are propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, $\gamma$-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For use as the lithium salt, any suitable lithium salt available in the art may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $Lin(C_xF_{2x+1}SO_2)(C_yF_{2y+1}SO_2)$ (where x and y may each be a natural number of 1 to 20), $LiCl$, $Lil$, or a mixture thereof.

Alternatively, the electrolyte may be a solid electrolyte. The solid electrolyte may be, for example, boron oxide, lithium oxynitride, and the like, but embodiments are not limited thereto. Any suitable solid electrolyte available in the art may be used. The solid electrolyte may be formed on the anode by a method such as sputtering, or a separate solid electrolyte sheet may be laminated on the anode.

The solid electrolyte may be, for example, an oxide-based solid electrolyte or a sulfide-based solid electrolyte.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where 0<x<2 and 0≤y<3), $BaTiO_3$, $Pb(Rati)O_3(PZT)$, $Pb_{1-x}La_xZr_{1-y}Ti_yO_3(PLZT)$ (where 0≤x<1 and Ooty<1), $PB(Mg_3Nb_{2/3})O_3-PbTiO_3(PMN-PT)$, $HfO_2$, $SrTiO_3$, $SnO_2$, $CeO_2$, $Na_2O$, $MgO$, $NiO$, $CaO$, $BaO$, $ZnO$, $ZrO_3$, $Y_2O_3$, $Al_2O_3$, $TiO_3$, $SiO_3$, $Li_3PO_4$, $La_xit_y(PO_4)_3$ (where 0<x<2 and 0<y<3), $Di_aly_tic(PO_4)_3$ (where 0<x<2, 0<y<1, and 0<z<3), $Li_{1+x+y}(Al, Ga)_x(Ti, Ge)_{2-x}Si_yP_{3-y}O_{12}$ (where 0≤x≤1 and 0≤y≤1), $Li_xLa_yTiO_3$ (where 0<x<2 and 0<y<3), $Li_2O$, Lihou, $Li_2CO_3$, $LiAlO_2$, $Li_2O-Al_2O_3-SiO_2-P_2O_5-TiO_2-GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}(LLZO)$ and $Li_{3+x}La_3Zr_{2-a}M_aO_{12}$ (M-doped LLZO) (where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ or $P_2S_5$. The particles of the sulfide-based solid electrolyte particles are known to have higher lithium ionic conductivity than other inorganic compounds. For example, the sulfide-based solid electrolyte may include $Li_2S$ and $P_2S_5$. When the

sulfide solid electrolyte material constituting the sulfide-based solid electrolyte includes $Li_2S-P_2S_5$, a mixing molar ratio of $Li_2S$ to $P_2S_5$ may be, for example, in a range of about 50:50 to about 90:10. In addition, an inorganic solid electrolyte prepared by adding $Li_3PO_4$, halogen, a halogen compound, $Li_{2+2x}Zn_{1-x}GeO_4$ ("LISICON")(where $0 \leq x < 1$), $Li_{3+y}PO_{4-x}N_x$ ("LIPON")(where $0 < x < 4$ and $0 < y < 3$), $Li_{3.25}Ge_{0.25}P_{0.75}S_4$("Thoi-LISICON"), $Li_2O-Al_2O_3-TiO_2-P_2O_5$("LATP"), or the like to an inorganic solid electrolyte, such as $Li_2S-P_2S_5$, $SiS_2$, $GeS_2$, $B_2S_3$, or a combination thereof, may be used as the sulfide solid electrolyte. Nonlimiting examples of the sulfide solid electrolyte material are: $Li_2S-P_2S_5$; $Li_2S-P_2S_5-LiX$ (where X may be a halogen element); $Li_2S-P_2S_5-Li_2O$; $Li_2S-P_2S_5-Li_2O-LiI$; $Li_2S-SiS_2$; $Li_2S-SiS_2-LiI$; $Li_2S-SiS_2-LiBr$; $Li_2S-SiS_2-LiCl$; $Li_2S-SiS_2-B_2S_3-LiI$; $Li_2S-SiS_2-P_2S_5-LiI$; $Li_2S-B_2S_3$; $Li_2S-P_2S_5-Z_mS_n$ (where $0 < m < 10$, $0 < n < 10$, and Z may be Ge, Zn, or Ga); $Li_2S-GeS_2$; $Li_2S-SiS_2-Li_3PO_4$; and $Li_2S-SiS_2-Li_pMO_q$ (where $0 < p < 10$, $0 < q < 10$, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. Also, a calcination process may be performed after the treatment. The sulfide-based solid electrolyte may be amorphous or crystalline, or may be in a mixed state.

As shown in FIG. 1, a lithium battery 1 according to an embodiment includes a cathode 3, an anode 2, and a separator 4. The cathode 3, the anode 2, and the separator 4 may be wound or folded to be accommodated in a battery case 5. Then, the battery case 5 may be filled with an organic electrolyte solution, and sealed with a cap assembly 6, thereby completing the manufacture of the lithium battery 1. The battery case 5 may be cylindrical, but the shape of the battery case 5 is not necessarily limited thereto. For example, the battery case 5 may be a square-type, a thin-film type, or the like.

The pouch-type lithium battery may include at least one battery assembly. The separator 4 may be disposed between the cathode 3 and the anode 2 to form a battery assembly. The battery assembly may be laminated as a bi-cell structure, impregnated with an organic electrolyte solution, and accommodated and sealed in a pouch to complete the manufacture of a pouch-type lithium battery.

A plurality of lithium batteries may be stacked to form a battery module and/or a battery pack, and such a battery module and/or battery pack may be used in all devices requiring high capacity and high output. For example, the battery pack module and/or battery pack may be used in a laptop computer, a smart phone, an electronic vehicle, or the like.

A lithium battery using a solid electrolyte may be a solid battery or an all-solid battery. In a lithium battery using a solid electrolyte, a solid electrolyte layer may be disposed instead of the separator 4 between the cathode 3 and the anode 2. A lithium battery using a solid electrolyte may additionally include a solid electrolyte in at least one of the cathode 3 and the anode 2. For example, in a lithium battery in which an electrolyte layer including a sulfide-based solid electrolyte is disposed between the cathode 3 and the anode 2, at least one of the cathode 3 and the anode 2 may include a sulfide-based solid electrolyte.

Since lithium batteries have excellent lifespan characteristics and high rate characteristics, the lithium batteries may be used, for example, in electric vehicles (EVs) and energy storage systems (ESSs). For example, the lithium batteries may be used in hybrid vehicles, such as plug-in hybrid electric vehicles (PHEVs). In addition, the lithium batteries may be applicable to the fields requiring high-power storage. For example, the lithium batteries may be used in electric bicycles, power tools, or the like.

Another aspect provides a method of preparing the composite cathode active material includes: providing a first lithium metal oxide; providing a second lithium metal oxide; providing a composite; preparing at least one of a 1st core/shell and a 2nd core/shell, wherein the 1st core/shell structure is obtained by mechanically milling the first lithium transition metal oxide and the composite and the 2nd core/shell structure is obtained by mechanically milling the second lithium transition metal oxide and the composite; and mixing the 1st core/shell structure with the second lithium transition metal oxide, mixing the 2nd core/shell structure with the first lithium transition metal oxide, or mixing the 1st core/shell structure with the 2nd core/shell structure, wherein the composite includes: at least one first metal oxide represented by $M_aO_b$ (where $0 < a \leq 3$, $0 < b < 4$, and when a is 1, 2, or 3, b is not an integer); and the at least one first metal oxide is disposed in a matrix of the carbon-based material, and M is at least one metal selected from Groups 2 to 13, 15, and 16 of the Periodic Table of Elements. In the mechanically milling process, the milling method is not particularly limited, and any method capable of directly contacting the lithium transition metal oxide and the composite by using a machine available in the art may be used.

Then, a first lithium transition metal oxide may be provided. The first lithium transition metal oxide may be, for example, the compound represented by one of Formulae 1 to 6.

Then, a second lithium transition metal oxide may be provided. The second lithium transition metal oxide may be, for example, the compound represented by one of Formulae 1 to 6.

The preparing of the composite may include, for example: providing an undoped composite by supplying reaction gas consisting of carbon source gas to a structure including a metal oxide and heat-treating the structure; and preparing a composite by mixing the undoped composite with a fluorine (F)-containing compound.

The providing of the composite may include, for example, preparing an undoped composite by supplying reaction gas consisting of carbon source gas to at least one of second metal oxide represented by $M_aO_c$ (where $0 < a \leq 3$, $0 < c < 4$,

and when a may be 1, 2, or 3, b is an integer) and heat-treating the at least one second metal oxide, wherein M may be at least one metal selected from Groups 2 to 13, 15, and 16 of the Periodic Table of Elements.

The carbon source gas may include a compound represented by Formula 7, or may be mixed gas including at least one selected from the group consisting of a compound represented by Formula 7, a compound represented by Formula 8, and oxygen-containing gas represented by Formula 9:

$$\text{Formula 7} \qquad CnH_{(2n+2-a)}[OH]_a$$

wherein, in Formula 7, n may be an integer from 1 to 20, and a may be 0 or 1;

$$\text{Formula 8} \qquad CnH_{2n}$$

wherein, in Formula 8, n may be an integer from 2 to 6; and

$$\text{Formula 9} \qquad C_xH_yO_z$$

wherein, in Formula 9, x may be 0 or an integer from 1 to 20, y may be 0 or an integer from 1 to 20, and z may be 1 or 2.

The compound represented by Formula 7 and the compound represented by Formula 8 may be at least one selected from the group consisting of methane, ethylene, propylene, methanol, ethanol, and propanol. The oxygen-containing gas represented by Formula 9 may include, for example, carbon dioxide ($CO_2$), carbon monoxide (CO), water vapor ($H_2O$), or a mixture thereof.

Following the providing of the reaction gas consisting of the carbon source gas to the second metal oxide represented by $M_aO_c$ (where 0<a≤3, 0<c≤4, and when a is 1, 2, or 3, c may be an integer) and heat-treating the second metal oxide, a cooling process may be further performed by using at least one inert gas selected from the group consisting of nitrogen, helium, and argon. The cooling process refers to adjusting the reaction temperature to room temperature (20 °C to 25 °C). The carbon source gas may include at least one inert gas selected from the group consisting of nitrogen, helium, and argon.

In the preparation method of the composite, a process of growing a carbon-based material, e.g., graphene, may be performed under various conditions depending on a gas reaction.

According to a first condition, for example, methane may be provided first to a reactor, in which the second metal oxide represented by $M_aO_c$ (where 0<a≤3 and 0<c≤4, and when a is 1, 2, or 3, c may be an integer) is disposed, and the reaction temperature may be raised to a heat treatment temperature T. The time required for raising the reaction temperature to the heat treatment temperature T may be in a range of 10 minutes to 4 hours, and the heat treatment temperature T may be in a range of 700 °C to 1100 °C. The heat treatment may be performed during the reaction time at the heat treatment temperature T. The reaction time may be, for example, in a range of 4 hours to 8 hours. The heat-treated product may be cooled to room temperature to prepare a composite. The time required for lowering the reaction temperature from the heat treatment temperature T to the room temperature may be, for example, in a range of 1 hour to 5 hours.

According to a second condition, for example, hydrogen may be provided first to a reactor, in which the second metal oxide represented by $M_aO_c$ (where 0<a≤3 and 0<c≤4, and when a is 1, 2, or 3, c may be an integer) is disposed, and the reaction temperature may be raised to the heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a predetermined reaction time, methane gas may be supplied, and the heat-treatment may be performed for the residual reaction time. The reaction time may be, for example, in a range of 4 hours to 8 hours. The heat-treated product may be cooled to room temperature to prepare a composite. In the cooling process, nitrogen may be provided. The time required for lowering the reaction temperature from the heat treatment temperature T to the room temperature may be, for example, in a range of 1 hour to 5 hours.

According to a third condition, for example, hydrogen may be provided first to a reactor, in which the second metal oxide represented by $M_aO_c$ (where 0<a≤3 and 0<c≤4, and when a is 1, 2, or 3, c may be an integer) is disposed, and the reaction temperature may be raised to the heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a predetermined reaction time, mixed gas of methane and hydrogen may be supplied, and the heat-treatment may be performed for the residual reaction time. The reaction time may be, for example, in a range of 4 hours to 8 hours. The heat-treated product may be cooled to room temperature to prepare a composite. In the cooling process, nitrogen may be provided thereto. The time required for lowering the reaction temperature from the heat treatment temperature T to the room temperature may be, for example, in a range of 1 hour to 5 hours.

In the preparation of the composite, when the carbon source gas includes water vapor, the composite having excellent conductivity may be obtained. The content of water vapor in the gas mixture is not limited, and may be, for example, in a range of 0.01 vol% to 10 vol% based on 100 vol% of the total carbon source gas. The carbon source gas may be: for example, methane; mixed gas including methane and inert gas; or mixed gas including methane and oxygen-containing gas.

The carbon source gas may be: for example, methane; mixed gas including methane and carbon dioxide; or mixed gas including methane, carbon dioxide, and water vapor. The molar ratio of methane and carbon dioxide in the mixed gas of methane and carbon dioxide may be in a range of about 1:0.20 to about 1:0.50, about 1:0.25 to about 1:0.45, or about 1:0.30 to about 1:0.40. The molar ratio of methane and carbon dioxide and water vapor in the mixed gas of methane and carbon dioxide and water vapor may be in a range of about 1:0.20 to about 0.50:0.01 to 1.45, about 1:0.25 to about 0.45:0.10 to 1.35, or about 1:0.30 to about 0.40:0.50 to 1.0.

The carbon source gas may be, for example, carbon monoxide or carbon dioxide. The carbon source gas may be, for example, mixed gas of methane and nitrogen. The molar ratio of methane and nitrogen in the mixed gas of methane and nitrogen may be in a range of about 1: 0.20 to about 1: 0.50, about 1: 0.25 to about 1: 0.45, or about 1: 0.30 to about 1: 0.40. The carbon source gas may not include inert gas such as nitrogen.

The heat treatment pressure may be selected in consideration of the heat treatment temperature, the composition of the gas mixture, and the desired coating amount of carbon. The heat treatment pressure may be controlled by adjusting the amount of the inflowing gas mixture and the amount of the outflowing gas mixture. The heat treatment pressure may be, for example, greater than or equal to 0.5 atm, greater than or equal to 1 atm, greater than or equal to 2 atm, greater than or equal to 3 atm, greater than or equal to 4 atm, or greater than or equal to 5 atm.

The time for the heat treatment time is not particularly limited, and may be selected in consideration of the heat treatment temperature, the heat treatment pressure, the composition of the gas mixture, and the desired coating amount of carbon. For example, the reaction time at the heat treatment temperature may be, for example, in a range of 10 minutes to 100 hours, 30 minutes to 90 hours, or 50 minutes to 40 hours. For example, as time for the heat treatment increases, the amount of graphene (e.g., carbon) deposited increases, and thus the electrical properties of the composite may be improved. However, such a trend may not necessarily be directly proportional to the time. For example, after a predetermined period of time, the deposition of carbon, e.g., graphene, may no longer occur, or the deposition rate of graphene may be lowered.

Through a gas phase reaction of the aforementioned carbon source gas, even at a relatively low temperature, an undoped composite may be obtained by providing uniform coating of the carbon-based material, e.g., coating of graphene, to at least one selected from the second metal oxide represented by $M_aO_c$ (where $0<a\leq3$, $0<c\leq4$, and when a is 1, 2, or 3, c may be an integer) and a reduction product thereof that is the first metal oxide represented by $M_aO_b$ (where $0<a\leq3$, $0<b<4$, and when a is 1, 2, or 3, b may not be an integer).

The undoped composite may include: for example, a matrix of the carbon-based material, such as a graphene matrix, having at least one structure selected from a spherical structure, a spiral structure in which a plurality of spherical structures are connected, a cluster structure in which a plurality of spherical structures are aggregated, and a sponge structure; and at least one selected from first metal oxide represented by $M_aO_b$ (wherein $0<a\leq3$, $0<b<4$, and when a is 1, 2, or 3, b may not be an integer) and the second metal oxide represented by $M_aO_c$ (wherein $0<a\leq3$, $0<c\leq4$, and when a is 1, 2, or 3, c may be an integer) disposed in the matrix of the carbon-based material.

Next, the 1st core/shell structure is prepared by mechanically milling the first lithium transition metal oxide and the composite. For the milling, a Nobilta mixer or the like may be used. The number of revolutions of the mixer during milling may be, for example, in a range of 1,000 rpm to 2,500 rpm. When the milling speed is less than 1,000 rpm, the shear force applied to the first lithium transition metal oxide and the composite is weak, and thus a chemical bond may be difficult to form between the first lithium transition metal oxide and the composite. When the milling speed is significantly high, the composite may be uniformly coated on the first lithium transition metal oxide as the complexation is performed in an excessively short time, and thus a uniform and continuous shell may be difficult to form. The milling time may be, for example, in a range of 5 minutes to 100 minutes, 5 minutes to 60 minutes, or 5 minutes to 30 minutes. When the milling time is significantly short, the composite may be uniformly coated on the first lithium transition metal oxide, and thus a uniform and continuous shell may be difficult to form. When the milling time is significantly long, the production efficiency may decrease. The content of the composite may be less than or equal to 3 wt%, less than or equal to 2 wt%, or less than or equal to 1 wt%, based on the total weight of the first lithium transition metal oxide and the composite. The content of the composite may be, for example, in a range of 0.01 wt% to 3 wt%, 0.1 wt% to 2 wt%, or 0.1 wt% to 1 wt%, based on the total weight of the first lithium transition metal oxide and the composite. For example, the content of the composite may be, based on 100 parts by weight of the mixture of the first lithium transition metal oxide and the composite, in a range of 0.01 parts by weight to 3 parts by weight, 0.1 parts by weight to 3 parts by weight, 0.1 parts by weight to 2 parts by weight, or 0.1 parts by weight to 1 parts by weight. The average particle diameter D50 of the composite used for the mechanical milling of the first lithium transition metal oxide and the composite may be, for example, in a range of 1 $\mu$m to 20 $\mu$m, 3 $\mu$m to 15 $\mu$m, or 5 $\mu$m to 10 $\mu$m.

Alternatively, the 2nd core/shell structure is prepared by mechanically milling the second lithium transition metal oxide and the composite. The 2nd core/shell structure may be prepared in the same manner as in the 1st core/shell structure, except that the second lithium transition metal oxide is used instead of the first lithium transition metal oxide.

Alternatively, according to the aforementioned method, the 1st core/shell structure and the 2nd core/shell structure may be prepared respectively.

Next, a composite cathode active material may be prepared by mixing the 1st core/shell structure and the 2nd lithium metal oxide. The weight ratio of the 1st core/shell structure to the second lithium transition metal oxide may be, for example, in a range of 90:10 to 60:40, 85:15 to 65:35, or 80:20 to 70:30. When the weight ratio of 1st core/shell structure to the second lithium transition metal oxide is within the ranges above, the energy density and/or cycle characteristics of the lithium battery including the composite cathode active material may be further improved.

Alternatively, a composite cathode active material may be prepared by mixing the first lithium transition metal oxide and the 2nd core/shell structure. The weight ratio of the first lithium transition metal oxide to the 2nd core/shell structure may be, for example, in a range of 90:10 to 60:40, 85:15 to 65:35, or 80:20 to 70:30. When the weight ratio of the first lithium transition metal oxide to the 2nd core/shell structure is within the ranges above, the energy density and/or cycle characteristics of a lithium battery including the composite cathode active material may be further improved.

Alternatively, a composite cathode active material may be prepared by mixing the 1st core/shell structure and the 2nd core/shell structure. The weight ratio of the 1st core/shell structure to the 2nd core/shell structure may be, for example, in a range of 90:10 to 60:40, 85:15 to 65:35, or 80:20 to 70:30. When the weight ratio of the 1st core/shell structure to the 2nd core/shell structure is within the ranges above, the energy density and/or cycle characteristics of a lithium battery including the composite cathode active material may be further improved.

Mode for Invention

The present disclosure is in greater details through Examples and Comparative Examples below. However, the following embodiments are for illustrative purpose only and shall not be construed as limiting the scope of the disclosure.

Preparation of composite

Preparation Example 1: $Al_2O_3$@Gr composite

$Al_2O_3$ particles (average particle diameter: about 20 nanometers (nm)) were placed in a reactor, and then the temperature inside the reactor was raised to 1,000 °C under the condition that $CH_4$ was supplied into the reactor at about 300 standard cubic centimeters per minute (sccm) and about 1 atmosphere (atm) for about 30 minutes.

Subsequently, heat treatment was performed thereon while maintaining the temperature same for 7 hours. Then, the temperature inside the reactor was adjusted to room temperature (20 °C to 25 °C) to obtain an undoped composite in which $Al_2O_3$ particles and $Al_2O_z$ (where 0<z<3) particles as a reduction product of the $Al_2O_3$ particles were embedded in graphene.

Here, the content of alumina included in the undoped composite was 60 wt%.

Comparative Preparation Example 1: $SiO_2$@Gr composite

$SiO_2$ particles (average particle diameter: about 15 nm) were placed in a reactor, and then the temperature inside the reactor was raised to 1,000 °C under the condition that $CH_4$ was supplied into the reactor at about 300 sccm and about 1 atm for about 30 minutes.

Subsequently, heat treatment was performed thereon while maintaining the temperature same for 7 hours. Then, the temperature inside the reactor was adjusted to room temperature (20 °C to 25 °C) to obtain a composite in which $SiO_2$ particles and $SiO_y$ (where 0<y<2) particles as a reduction product of the $SiO_2$ particles were embedded in graphene.

(Preparation of composite cathode active material)

Example 1: $Al_2O_3$@Gr composite 0.4 wt% (alumina 0.24 wt%)-coated large-diameter NCA91 and $Al_2O_3$@Gr composite 0.4 wt% (alumina 0.24 wt%)-coated small-diameter NCA91

Large-diameter $LiNi_{0.91}Co_{0.05}Al_{0.04}O_2$ (hereinafter referred to as large-diameter NCA91) having an average particle diameter of 17 $\mu$m and the composite prepared in Preparation Example 1 were milled at a rotation speed in a range of about 1,000 revolutions per minutes (rpm) to about 2,000 rpm for about 5 minutes to about 30 minutes by using a Nobilta mixer (Hosokawa, Japan) to obtain a 1st core/shell structure. The mixing weight ratio of the large-diameter NCA to the composite of Preparation Example 1 was 99.6:0.4.

Small-diameter $LiNi_{0.91}Co_{0.05}Al_{0.04}O_2$ (hereinafter referred to as small-diameter NCA91) having an average particle diameter of 3.5 $\mu m$ and the composite prepared in Preparation Example 1 were milled at a rotation speed in a range of about 1,000 revolutions per minutes (rpm) to about 2,000 rpm for about 5 minutes to about 30 minutes by using a Nobilta mixer (Hosokawa, Japan) to obtain a 2nd core/shell structure. The mixing weight ratio of the small-diameter NCA to the composite of Preparation Example 1 was 99.6:0.4.

A composite cathode active material was prepared by mixing the 1st core/shell structure and the 2nd core/shell structure at a weight ratio of 7:3.

As a result of measuring the particle size distribution by using a particle size analyzer (PSA), it was confirmed that the composite had a bimodal particle size distribution.

Example 2: $Al_2O_3$@Gr composite 0.4 wt% (alumina 0.24 wt%)-coated large-diameter NCA91 and bare small-diameter NCA91

Large-diameter $LiNi_{0.91}Co_{0.05}Al_{0.04}O_2$ (hereinafter referred to as large-diameter NCA91) having an average particle diameter of 17 $\mu m$ and the composite prepared in Preparation Example 1 were milled at a rotation speed in a range of about 1,000 revolutions per minutes (rpm) to about 2,000 rpm for about 5 minutes to about 30 minutes by using a Nobilta mixer (Hosokawa, Japan) to obtain a 1st core/shell structure. The mixing weight ratio of the large-diameter NCA to the composite of Preparation Example 1 was 99.6:0.4.

Small-diameter $LiNi_{0.91}Co_{0.05}Al_{0.04}O_2$ (hereinafter, referred to as small-diameter NCA91) having an average particle diameter of 3.5 $\mu m$ was used as it is.

A composite cathode active material was prepared by mixing the 1st core/shell structure and the small-diameter NCA at a weight ratio of 7:3.

As a result of measuring the particle size distribution by using a PSA, it was confirmed that the composite had a bimodal particle size distribution.

Example 3: Bare large-diameter NCA91 and $Al_2O_3$@Gr composite 0.4 wt% (alumina 0.24 wt%)-coated small diameter NCA91

Large-diameter $LiNi_{0.91}Co_{0.05}Al_{0.04}O_2$ (hereinafter, referred to as large-diameter NCA91) having an average particle diameter of 17 $\mu m$ was used as it is.

Small-diameter $LiNi_{0.91}Co_{0.05}Al_{0.04}O_2$ (hereinafter referred to as small-diameter NCA91) having an average particle diameter of 3.5 $\mu m$ and the composite prepared in Preparation Example 1 were milled at a rotation speed in a range of about 1,000 revolutions per minutes (rpm) to about 2,000 rpm for about 5 minutes to about 30 minutes by using a Nobilta mixer (Hosokawa, Japan) to obtain a 2nd core/shell structure. The mixing weight ratio of the small-diameter NCA to the composite of Preparation Example 1 was 99.6:0.4.

A composite cathode active material was prepared by mixing the large-diameter NCA and the 2nd core/shell structure at a weight ratio of 7:3.

As a result of measuring the particle size distribution by using a PSA, it was confirmed that the composite had a bimodal particle size distribution.

Comparative Example 1: Bare large-diameter NCA91 only

The large-diameter NCA91 having an average particle diameter of 17 $\mu m$ was used as it is as a composite cathode active material.

As a result of measuring the particle size distribution by using a PSA, it was confirmed that the composite had a monomodal particle size distribution.

Comparative Example 2: $SiO_2$@Gr composite 0.4 wt% (silica 0.24 wt%)-coated large-diameter NCA91 and : $SiO_2$@Gr composite 0.4 wt% (silica 0.24 wt%)-coated small-diameter NCA91

A composite cathode active material was prepared in the same manner as in Example 1, except that the $SiO_2$@Gr composite of Comparative Preparation Example 1 was used instead of the $Al_2O_3$@Gr composite of Preparation Example 1.

(Manufacture of lithium battery (half cell))

Example 4

(Manufacture of cathode)

A mixture of the composite cathode active material of Example 1, a carbon conductive material (e.g., Denka Black), and polyvinylidene fluoride (PVdF) mixed at a weight ratio of 96:2:2 was mixed with N-methyl pyrrolidone (NMP) in an agate mortar to prepare a slurry.

The slurry was bar-coated on an aluminum current collector having a thickness of 15 $\mu$m, dried at room temperature, further dried in vacuum at 120 °C, and rolled and punched to prepare a cathode plate having a thickness of 60 $\mu$m.

(Manufacture of coin cell)

Each coin cell was manufactured by using the prepared cathode plate. Here, lithium metal was used as a counter electrode, and a solution in which a PTFE separator and 1.5 M $LiPF_6$ was dissolved in ethylene carbonate (EC)+ethyl methyl carbonate (EMC)+dimethyl carbonate (DMC) (at a volume ratio of 2:4:4) was used as an electrolyte.

Examples 5 and 6

Each coin cell was manufactured in the same manner as in Example 4, except that the composite cathode active material of each of Examples 2 and 3 was used instead of the composite cathode active material of Example 1.

Comparative Examples 3 and 4

Each coin cell was manufactured in the same manner as in Example 4, except that the composite cathode active material of each of Comparative Examples 1 and 2 was used instead of the composite cathode active material of Example 1.

Evaluation Example 1: XPS spectrum evaluation

In the process of preparing the undoped composite of Preparation Example 1, XPS spectra were measured by using Qunatum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, the peak for the Al 2p orbital appeared, and the peak for the C 1s orbital did not appear. After 30 minutes, the peak for the 1s orbital appeared clearly, and the size of the peak for the Al 2p orbital significantly reduced.

After 30 minutes, near 284.5 electron volt (eV), peaks for C 1s orbitals appeared clearly due to C-C bonds and C=C bonds due to graphene growth.

As reaction time elapsed, the oxidation number of aluminum decreased, and thus the peak position of the Al 2p orbital was shifted toward a lower binding energy (eV).

Accordingly, it was confirmed that, as the reaction proceeded, graphene was grown on $Al_2O_3$ particles, and $Al_2O_x$ (where 0<x<3), which is a reduction product of $Al_2O_3$, was produced.

The average contents of carbon and aluminum were measured through XPS analysis results in 10 regions of the composite sample prepared in Reference Preparation Example 1. With respect to the measurement results, a deviation of the aluminum content for each region was calculated. The deviation of the aluminum content was expressed as a percentage of the average value, and this percentage was referred to as uniformity. The percentage of the average value of the deviation of the aluminum content, that is, the uniformity of the aluminum content was 1 %. Therefore, it was confirmed that alumina was uniformly distributed in the composite prepared in Reference Preparation Example 1.

Evaluation Example 2: SEM, HR-TEM, and SEM-EDAX analysis

For the composite of Preparation Example 1, the composite cathode active material of Example 1, and the bare NCA of Comparative Example 1, the scanning electron microscopy, high-resolution transmission electron microscopy, and EDAX analysis were performed.

For the SEM-EDAX analysis, FEI Titan 80-300 available from Philips Company was used.

The composite of Preparation Example 1 showed a structure in which $Al_2O_3$ particles and $Al_2O_z$ (where 0<z<3) particles as a reduction product of the $Al_2O_3$ particles were embedded in graphene. It was confirmed that the graphene layer was disposed on the outer surface of at least one particle selected from $Al_2O_3$ and $Al_2O_z$ particles (where 0<z<3).

The at least one particle selected from $Al_2O_3$ and $Al_2O_z$ particles (where 0<z<3) were uniformly distributed in the graphene matrix. The at least one particle selected from $Al_2O_3$ and $Al_2O_z$ particles (where 0<z<3) had a particle diameter of about 20 nm. The composite of Preparation Example 1 had a particle diameter in a range of about 100 nm to about 200 nm.

It was confirmed that a shell formed by a composite including graphene was disposed on the NCA core in the composite cathode active material of Example 1.

The SEM-EDAX analysis was performed on the bare NCA of Comparative Example 1 and the composite cathode active material of Example 1.

It was confirmed that the concentration of aluminum (Al) distributed on the surface of the composite cathode active material of Example 1 increased compared to the surface of the bare NCA composite cathode active material of Comparative Example 1.

Therefore, it was confirmed that a shell was formed by uniformly coating the NCA core with the composite of Preparation Example 1 in the composite cathode active material of Example 1.

Evaluation Example 3: Measurement of pellet density

The pellet density in the composite cathode active materials of Examples 1 to 3 and Comparative Example 1 was measured, and the results are shown in Table 1 below.

1 g of the cathode active material of each of Examples 1 to 3 and Comparative Example 1 was put into a circular mold having a diameter of 1 cm, and a pressure of 1,000 $kgf/cm^2$ was applied thereto, to measure the density by mass per volume of the cathode active material in the form of a pellet.

Table 1

|  | Pellet density [g/cc] |
|---|---|
| Example 1: $Al_2O_3$@Gr composite 0.4 wt% coating/large-diameter NCA91 core and small-diameter NCA core | 3.7 |
| Example 2: $Al_2O_3$@Gr composite 0.4 wt% coated/large-diameter NCA91 core and bare small-diameter NCA core | 3.7 |
| Example 3: $Al_2O_3$@Gr composite 0.4 wt% coated/small-diameter NCA91 core and bare large-diameter NCA core | 3.8 |
| Comparative Example 1: Bare large-diameter NCA91 only | 3.3 |

As shown in Table 1, the composite cathode active materials of Examples 1 to 3 having a bimodal particle size distribution had increased pellet density compared to the composite cathode active material of Comparative Example 1 having a monomodal particle size distribution.

Therefore, it was confirmed that the lithium battery including the composite cathode active material of each of Examples 1 to 3 was able to provide improved energy density compared to the lithium battery including the composite cathode active material of Comparative Example 1.

Evaluation Example 4: Charge/discharge characteristics evaluation at room temperature (25 °C)

Each of the lithium batteries prepared in Examples 4 to 6 and Comparative Examples 3 and 4 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1st cycle). This cycle was repeated (50 times) until the 50th cycle under the same conditions.

In all charge/discharge cycles, a 10-minute stop time was provided after every one charge/discharge cycle. Some of the results of the charge/discharge test at room temperature are shown in Table 1 below. Here, the initial efficiency is defined by Equation 1, and the capacity retention rate is defined by Equation 2:

Equation 1

Initial efficiency [%]=[discharge capacity in 1st cycle/charge capacity in 1st cycle]×100

Equation 2

Capacity retention (%)=(discharge capacity in 50th cycle/discharge capacity in 1st cycle)×100 %

Evaluation Example 5: Evaluation of direct current internal resistance (DR-IR) before/after charging and discharging at room temperature

With respect to the lithium batteries of Examples 4 to 6 and Comparative Examples 3 and 4, before the evaluation of charging and discharging at room temperature and after the evaluation of charging and discharging at room temperature, the DC-IR was measured by the following method, respectively:

after charging to a voltage of 50 % of the state of charge with a current density of 0.5 C in the 1st cycle, a 10-minute resting time was provided after cut-off at 0.02 C;
after discharging at a constant current of 0.5 C for 30 seconds, a 10-minute resting time was provided after charging with a constant current of 0.5 C for 30 seconds;
after discharging at a constant current of 1.0 C for 30 seconds, a 10-minute resting time was provided after charging with a constant current of 0.5 C for 1 minute;
after discharging at a constant current of 2.0 C for 30 seconds, a 10-minute resting time was provided after charging with a constant current of 0.5 C for 2 minutes; and
after discharging at a constant current of 3.0 C for 30 seconds, a 10-minute resting time was provided after charging with a constant current of 0.5 C for 3 minutes.

From a ratio of average voltage change ($\Delta V$) and average current change ($\Delta I$) during discharging at a constant current at each C-rate, the DC-IR (where R=$\Delta V/\Delta I$) was calculated, and an average value thereof was used as a measured value.

Some of the measured DC-IR before the evaluation of charging and discharging at room temperature and the DC-IR measurement results after the evaluation of charging and discharging at room temperature are shown in Table 2 below.

Table 2

|  | Initial efficien cy [%] | Capacity retention rate [%] | Initial DC-IR [ohm] | DC-IR after 100 cycles [ohm] |
|---|---|---|---|---|
| Example 4: Al$_2$O$_3$@Gr composite 0.4 wt% coating/ large-diameter NCA91 core and small-diameter NCA core | 90.7 | 91.7 | 5.8 | 11.2 |
| Example 5: Al$_2$O$_3$@Gr composite 0.4 wt% coated/ large-diameter NCA91 core and bare small-diameter NCA core | 90.6 | 91.4 | 6.2 | 11.8 |
| Example 6: Al$_2$O$_3$@Gr composite 0.4 wt% coated/ small-diameter NCA91 core and bare large-diameter NCA core | 91.1 | 92.3 | 4.4 | 8.6 |
| Comparative Example 3: Bare large-diameter NCA91 only (no coating) | 88.9 | 85.8 | 5.5 | 15.7 |

As shown in Table 2, it was confirmed that the lithium batteries of Examples 4 to 6 had improved initial efficiency and lifespan characteristics at room temperature, compared to the lithium battery of Comparative Example 3.

Although not shown in the table, the lithium battery of Comparative Example 4 also had poor lifespan characteristics at room temperature, compared to the lithium batteries of Examples 4 to 6.

In addition, the lithium batteries of Examples 4 to 6 significantly suppressed the increase in the DC internal resistance after the charging and discharging at room temperature, compared to the lithium battery of Comparative Example 3.

Evaluation Example 6: Evaluation of charge and discharge characteristics at high temperature (45 °C)

Each of the lithium batteries prepared in Examples 4 to 6 and Comparative Examples 3 and 4 was charged with a constant current of 0.2 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (formation cycle).

Each of the lithium batteries having undergone the formation cycle was charged with a constant current of 0.2 C rate at 45 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1st cycle). This cycle was repeated (100 times) until the 100th cycle under the same conditions.

In all charge/discharge cycles, a 10-minute stop time was provided after every one charge/discharge cycle. Some of the results of the charge/discharge test at high temperatures are shown in Table 3. The capacity retention rate is defined by Equation 3:

Equation 3

Capacity retention (%)=(discharge capacity in 100th cycle/discharge capacity in 1st cycle)×100 %

Table 3

| | Capacity retention rate [%] |
|---|---|
| Example 4: Al$_2$O$_3$@Gr composite 0.4 wt% coating/large-diameter NCA91 core and small-diameter NCA core | 73.1 |
| Example 5: Al$_2$O$_3$@Gr composite 0.4 wt% coated/large-diameter NCA91 core and bare small-diameter NCA core | 71.3 |
| Example 6: Al$_2$O$_3$@Gr composite 0.4 wt% coated/small-diameter NCA91 core and bare large-diameter NCA core | 74.6 |
| Comparative Example 3: Bare large-diameter NCA91 only (no coating) | 50.5 |

As shown in Table 3, it was confirmed that the lithium batteries of Examples 4 to 6 had improved lifespan characteristics at high temperatures, compared to the lithium battery of Comparative Example 3.

Although not shown in Table 3, the lifespan characteristics at high temperatures of the lithium battery of Comparative Example 4 were significantly degraded, compared to the lithium batteries of Examples 4 to 6.

INDUSTRIAL APPLICABILITY

According to an aspect, in a composite cathode active material, a shell including a first metal oxide and a carbon-based material may be disposed on at least one core of a large-diameter lithium transition metal oxide and a small-diameter lithium transition metal oxide, and accordingly, high-temperature cycle characteristics of a lithium battery may be improved and an increase in internal resistance of a lithium battery may be suppressed.

Elements of the Drawings

1: Lithium battery
2: Anode
3: Cathode
4: Separator
5: Battery case
6: Cap assembly

**Claims**

1. A composite cathode active material comprising:

   a 1st core comprising a lithium transition metal oxide;
   a 2nd core comprising a second lithium transition metal oxide; and
   a shell disposed along a surface of at least one of the 1st core and the 2nd core,
   wherein the shell comprises: at least one first metal oxide represented by $M_aO_b$ (where $0<a\leq3$, $0<b<4$, and when a is 1, 2, or 3, b is not an integer); and a carbon-based material,
   the at least one first metal oxide is disposed in a matrix of the carbon-based material, and M is at least one metal selected from Groups 2 to 13, 15, and 16 of the Periodic Table of Elements, and
   the first lithium transition metal oxide and the second lithium transition metal oxide have a different average particle diameter from each other.

2. The composite cathode active material of claim 1, wherein the first lithium transition metal oxide is a large-diameter lithium transition metal oxide, and a particle diameter of the first lithium transition metal oxide is a large diameter and is larger than a particle diameter of the second lithium transition metal oxide.

3. The composite cathode active material of claim 1, wherein the first lithium transition metal oxide and the second lithium transition metal oxide have a bimodal particle distribution.

4. The composite cathode active material of claim 1, wherein an average particle diameter of the first lithium transition metal oxide is greater than about 10 $\mu$m to less than or equal to about 25 $\mu$m, and an average particle diameter of the second lithium transition metal oxide is in a range of about 1 $\mu$m to about 10 $\mu$m.

5. The composite cathode active material of claim 1, wherein a weight ratio of the first lithium transition metal oxide to the second lithium transition metal oxide is in a range of about 90:10 to about 60:40.

6. The composite cathode active material of claim 1, wherein the shell is arranged only on the 1st core,

   the shell is disposed only on the 2nd core, or
   the shell is disposed both on the 1st core and the 2nd core.

7. The composite cathode active material of claim 1, wherein the metal comprised in the at least one first metal oxide comprises at least one metal selected from Al, Nb, Mg, Sc, Ti, Zr, V, W, Mn, Fe, Co, Pd, Cu, Ag, Zn, Sb, and Se.

8. The composite cathode active material of claim 1, wherein the at least one first metal oxide is at least one selected from $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$).

9. The composite cathode active material of claim 1, wherein the shell further comprises a second metal oxide represented by Formula $M_aO_c$ (where $0<a\leq3$, $0<c\leq4$, a is 1, 2, or 3, and c is an integer),

   the second metal oxide comprises a metal identical to the metal comprised in the at least one first metal oxide, and
   a ratio of c to a, i.e., c/a, in the second metal oxide is greater than a ratio of b to a, i.e., b/a, in the at least one first metal oxide.

10. The composite cathode active material of claim 9, wherein the second metal oxide is selected from $Al_2O_3$, NbO,

$NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and

the at least one first metal oxide is a reduction product of the second metal oxide.

11. The composite cathode active material of claim 1, wherein the shell has a thickness in a range of about 1 nm to about 5 $\mu$m.

12. The composite cathode active material of claim 1, wherein the shell comprises at least one selected from a composite, which comprises the at least one first metal oxide and the carbon-based material, and a milling product of the composite, and

an amount of at least one of the composite and the milling product of the composite is less than or equal to about 3 wt% based on the total weight of the composite cathode active material.

13. The composite cathode active material of claim 12, wherein the composite further comprises the second metal oxide having a different composition from the at least one first metal oxide,

an average particle diameter of at least one of the first metal oxide and the second metal oxide is in a range of about 1 nm to about 1 $\mu$m, and

a uniformity deviation of at least one of the first metal oxide and the second metal oxide is less than or equal to about 3 %.

14. The composite cathode active material of claim 12, wherein the carbon-based material has a branched structure, and the at least one first metal oxide is distributed in the branched structure, and

the branched structure comprises a plurality of carbon-based materials that are in contact with one another.

15. The composite cathode active material of claim 12, wherein the carbon-based material has at least one structure selected from a spherical structure, a spiral structure in which the spherical structures are linked to one another, and a cluster structure in which the spherical structures are aggregated,

the at least one first metal oxide is distributed in the spherical structure, and a size of the spherical structure is in a range of about 50 nm to about 300 nm, a size of the spiral structure is in a range of about 500 nm to about 100 $\mu$m, and a size of the cluster structure is in a range of about 0.5 mm to about 10 mm,

the composite has a crumpled faceted-ball structure or a planar structure, and at least one of the at least one first metal oxide and the second metal oxide is distributed inside or on such a structure, and

the carbon-based material extends from the at least one first metal oxide by a distance of less than or equal to about 10 nm, and comprises at least 1 to 20 carbon-based material layers, and a total thickness of the carbon-based material is in a range of about 0.6 nm to about 12 nm.

16. The composite cathode active material of claim 1, wherein the lithium transition metal oxide is represented by Formula 1 or 2:

$$\text{Formula 1} \qquad Li_aNi_xCo_yM_zO_{2-b}A_b$$

wherein, in Formula 1,

$1.0 \leq a \leq 1.2$, $0 \leq b \leq 0.2$, $0.8 \leq x < 1$, $0 \leq y \leq 0.3$, $0 < z \leq 0.3$, and $x+y+z=1$,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

$$\text{Formula 2} \qquad LiNi_xCo_yMn_zO_2$$

$$\text{Formula 3} \qquad LiNi_xCo_yAl_zO_2$$

wherein, in Formulae 2 and 3, $0.8 \leq x \leq 0.95$, $0 \leq y \leq 0.2$, $0 < z \leq 0.2$, and $x+y+z=1$,

$$\text{Formula 4} \qquad LiNi_xCo_yMn_zAl_wO_2$$

wherein, in Formula 4, 0.8≤x≤0.95, 0≤y≤0.2, 0<z≤0.2, 0<w≤0.2, and x+y+z+w=1,

Formula 5          $Li_aCo_xM_yO_{2-b}A_b$

wherein, in Formula 5,

1.0≤a≤1.2, 0≤b≤0.2, 0.9≤x≤1, 0≤y≤0.1, and x+y=1,
M is manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof.

17. A cathode comprising the composite cathode active material of any one of claims 1 to 16.

18. A lithium battery comprising:

the cathode of claim 18;
an anode; and
an electrolyte disposed between the cathode and the anode.

19. A method of preparing a composite positive electrode active material, the method comprising:

providing a first lithium transition metal oxide;
providing a second lithium transition metal oxide;
providing a composite;
preparing at least one of a first core/shell and a second core/shell, wherein the first core/shell structure is obtained by mechanically milling the first lithium transition metal oxide and the composite and the second core/shell structure is obtained by mechanically milling the second lithium transition metal oxide and the composite; and
mixing the first core/shell structure with the second lithium transition metal oxide, mixing the second core/shell structure with the first lithium transition metal oxide, or mixing the first core/shell structure with the second core/shell structure,
wherein the composite comprises: at least one first metal oxide represented by $M_aO_b$ (where 0<a≤3, 0<b<4, and when a is 1, 2, or 3, b is not an integer); and a carbon-based material, and
the at least one first metal oxide is disposed in a matrix of the carbon-based material, and M is at least one metal selected from Groups 2 to 13, 15, and 16 of the Periodic Table of Elements.

20. The method of claim 19, wherein the providing of the composite comprises supplying reaction gas consisting of a carbon supply source to at least one second metal oxide represented by $M_aO_c$ (where 0<a≤3, 0<c≤4, and when a is 1, 2, or 3, c is an integer) and performing heat treatment thereon,
wherein M is at least one metal selected from Groups 2 to 13, 15, and 16 of the Periodic Table of Elements.

# FIG. 1

## INTERNATIONAL SEARCH REPORT

| International application No. |
| --- |
| **PCT/KR2022/007973** |

### A. CLASSIFICATION OF SUBJECT MATTER

**H01M 4/36**(2006.01)i; **H01M 4/62**(2006.01)i; **H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/04(2006.01); H01M 10/052(2010.01); H01M 4/525(2010.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(positive electrode active material), 탄소(carbon), 코어(core), 쉘(shell), 바이모달(bimodal)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2015-0017012 A (SAMSUNG ELECTRONICS CO., LTD.) 16 February 2015 (2015-02-16)<br>See claims 2, 5, 7, 9 and 10; paragraphs [0032], [0049]-[0054], [0079], [0120], [0121] and [0132]; and figure 1. | 1-9,11-14,16-19 |
| A | | 10,15,20 |
| Y | KR 10-1540673 B1 (LG CHEM, LTD.) 30 July 2015 (2015-07-30)<br>See claims 1 and 4; and paragraphs [0083]-[0086]. | 1-9,11-14,16-19 |
| A | KR 10-2020-0046485 A (SAMSUNG ELECTRONICS CO., LTD. et al.) 07 May 2020 (2020-05-07)<br>See entire document. | 1-20 |
| A | KR 10-2016-0127887 A (DONGGUK UNIVERSITY INDUSTRY-ACADEMIC COOPERATION FOUNDATION) 07 November 2016 (2016-11-07)<br>See entire document. | 1-20 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **23 September 2022** | **23 September 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2022/007973**

**C.    DOCUMENTS CONSIDERED TO BE RELEVANT**

| Category* | Citation of document, with indication, where appropriate, of the relevant passages | Relevant to claim No. |
|---|---|---|
| A | KR 10-1511935 B1 (LG CHEM, LTD.) 14 April 2015 (2015-04-14) See entire document. | 1-20 |

**INTERNATIONAL SEARCH REPORT**
Information on patent family members

International application No.

**PCT/KR2022/007973**

| Patent document cited in search report | | | Publication date (day/month/year) | Patent family member(s) | | | Publication date (day/month/year) |
|---|---|---|---|---|---|---|---|
| KR | 10-2015-0017012 | A | 16 February 2015 | KR | 10-2214826 | B1 | 10 February 2021 |
| | | | | US | 10276870 | B2 | 30 April 2019 |
| | | | | US | 2015-0037680 | A1 | 05 February 2015 |
| KR | 10-1540673 | B1 | 30 July 2015 | CN | 104471759 | A | 25 March 2015 |
| | | | | CN | 104471759 | B | 12 January 2018 |
| | | | | EP | 2882014 | A1 | 10 June 2015 |
| | | | | EP | 2882014 | A4 | 06 April 2016 |
| | | | | JP | 2015-528181 | A | 24 September 2015 |
| | | | | JP | 6099741 | B2 | 22 March 2017 |
| | | | | KR | 10-2014-0018685 | A | 13 February 2014 |
| | | | | US | 2015-0162598 | A1 | 11 June 2015 |
| | | | | US | 9825283 | B2 | 21 November 2017 |
| | | | | WO | 2014-021626 | A1 | 06 February 2014 |
| KR | 10-2020-0046485 | A | 07 May 2020 | CN | 111092197 | A | 01 May 2020 |
| | | | | EP | 3693341 | A1 | 12 August 2020 |
| | | | | JP | 2020-068208 | A | 30 April 2020 |
| | | | | US | 2020-0136132 | A1 | 30 April 2020 |
| KR | 10-2016-0127887 | A | 07 November 2016 | KR | 10-1686614 | B1 | 15 December 2016 |
| | | | | US | 10593943 | B2 | 17 March 2020 |
| | | | | US | 2018-0123128 | A1 | 03 May 2018 |
| | | | | WO | 2016-175426 | A1 | 03 November 2016 |
| KR | 10-1511935 | B1 | 14 April 2015 | CN | 104488126 | A | 01 April 2015 |
| | | | | CN | 104488126 | B | 23 June 2017 |
| | | | | EP | 2851988 | A1 | 25 March 2015 |
| | | | | EP | 2851988 | A4 | 13 January 2016 |
| | | | | EP | 2851988 | B1 | 23 November 2016 |
| | | | | JP | 2015-525950 | A | 07 September 2015 |
| | | | | JP | 6019225 | B2 | 02 November 2016 |
| | | | | KR | 10-2014-0018137 | A | 12 February 2014 |
| | | | | US | 2015-0104704 | A1 | 16 April 2015 |
| | | | | US | 9761865 | B2 | 12 September 2017 |
| | | | | WO | 2014-021665 | A1 | 06 February 2014 |

Form PCT/ISA/210 (patent family annex) (July 2019)